# FASCICULE DE BREVET EUROPEEN

(11) **EP 2 918 353 B1**
(45) Date de publication et mention de la délivrance du brevet: **21.12.2016**
(21) Numéro de dépôt: 14290064.6
(22) Date de dépôt: 13.03.2014
(51) Int. Cl.: B09B 3/00, B09B 5/00, C05F 9/00, C05F 9/02, C05F 17/00, C05F 17/02, C05F 11/08

(54) **Procédé de traitement mécanique et biologique pour décomposer et réduire les matières d'origines organiques et, appareil pour la mise en oeuvre d'un tel procédé**
Mechanisches und biologisches Aufbereitungsverfahren zur Zersetzung und Reduzierung von organischen Substanzen, und Gerät zur Umsetzung dieses Verfahrens
Mechanical and biological treatment method for breaking down and reducing materials of organic origin, and apparatus for implementing such a method

(43) Date de publication de la demande: 16.09.2015
(73) Titulaire: Tombeur, Michel, 06830 Toudon (FR)
(72) Inventeur: Tombeur, Michel, 06830 Toudon (FR)

(56) Documents cités:
- WO-A1-02/48055
- WO-A1-2004/050268
- FR-A1- 2 864 067
- FR-A1- 2 965 737
- FR-A1- 2 995 299

## Description

Procédé de traitement mécanique et biologique pour décomposer et réduire les matières d'origines organiques et appareil pour la mise en oeuvre d'un tel procédé.

Appareil pour la dégradation ou la transformation en poudre fine de la matière organique solide ou liquide. L'invention permet la mutation des déchets alimentaires non utilisés et fermentescibles, ou cartons d'emballages, ou déchets verts, ou boues de stations d'épurations en élimination totale 100 %. L'invention propose un système intégré à l'appareil afin de liquéfier les déchets réduits sous forme de poudre, puis une fois liquéfiés de les oxygéner et de les transférer vers un bac de repos intégré à la dite invention. Cette poudre ensemencée et liquéfiée sera évacuée de l'appareil à l'aide d'une pompe vers un système de bac à graisses ou fosse toutes eaux ou tout système autorisant un rejet dans les réseaux d'égouts dans les valeurs de rejets admissibles au réseau public d'assainissement.

### Domaine technique

L'invention procède au broyage de toutes les matières organiques entrant et ainsi de permettre au système d'injection des bactéries de proposer un mélange homogène a la décomposition organique. Le broyeur est conçu tout spécialement pour permettre l'injection cadencée de micro organismes. De ce broyage en amont, la matière organique ainsi ensemencée par les consortiums est transférée dans la cuve de traitement des déchets organiques.

L'invention apporte un broyage spécifique à une mise à disposition des rejets alimentaire ou autres, tels que les os ou matières organiques dures ou plus difficilement dégradables avec le consortium de micro-organismes spécifiquement adapté à l'élimination complète des rejets.

L'invention concerne un procédé de préparation et de traitement biologique de dégradation des matières organiques fermentescibles. Le procédé de l'invention caractérisé par l'utilisation notamment de micro-organismes sélectionnés, nidifiés sur un support minéral > 400 m²/cm³, permettant l'augmentation du titrage u.f.c/gramme, nécessaire à la présente invention.

L'invention concerne un procédé mécanique innovant de préparation et d'augmentation in situ des consortiums de micro-organismes.
L'invention permet la nidification sur le support minéral permettant l'augmentation ou stabilisation du titrage bactérien u.f.c/gramme particulièrement orienté au traitement de la matière organique ou autres consortiums spécifique.

La présente invention admettant l'augmentation du titrage bactérien u.f.c/gramme permet une adaptation de notre système mécanique au vue de traiter les boues des stations d'épuration urbaine ou chimique par l'accommoda des souches, puis une redistribution des bactéries volontairement linéaires ou une distribution calibrée en fonction des besoins, pour potentialiser un bassin biologique de station urbaine par exemple.

Le procédé de traitement de l'invention permet dans un dispositif mécanique de notamment éliminer complètement à 100% les matières organiques émanant des résidus de cuisines alimentaire, de cantines industrielles, de fabricants de plats cuisinés, de selfs services, de cantines d'écoles, de lycée ou encore de la restauration en général, restauration rapide ou traditionnelle.
L'invention concerne les rejets alimentaires des grandes surfaces ou producteurs de déchets organiques.

L'invention concerne également un dispositif mécanique innovant disposant d'un système de chauffage de la cuve de compostage et de gérer automatiquement par un automate électronique les fonctions de l'invention dite carte mère. L'invention est dotée de diverses sondes de commandes et d'analyses permettant le contrôle à tous les niveaux du travail de dégradation. Par exemple : sondes hydrométrique ou encore sonde de température, ou encore sonde de Ph ou tout autre système de contrôle. L'invention permet de réactiver des bactéries spécifiques à ce type d'effluents et d'apporter de l'oxygène dans le bac primaire, puis de transférer l'effluent vers un bac de repos avant son transfert au réseau public d'assainissement ou bac à graisse.

Le dispositif de l'invention permet notamment de mettre en oeuvre un procédé de traitement de dégradation accéléré biologiquement et de modifier les matières organiques d'origine alimentaire ou fécale, humaine et ou animal.

Le dispositif de l'invention permet notamment de mettre en oeuvre la dégradation des matières organiques d'origine déchets verts issues de la tonte des pelouses ou encore des déchets verts en général de type algues marine.

L'invention permet la dégradation des déchets organiques de type emballages alimentaire de type cartons, papiers, ou bois, imprimés ou non imprimés.

Le dispositif de l'invention permet notamment de mettre en oeuvre un traitement spécifique de traitement biologique des résidus réduits dans la première étape de 80 à 90 %. La présente invention permet l'évacuation vers les égouts sous une forme liquide.

Pour ce faire la dite invention est équipé d'une cuve de traitement biologique puis équipé d'une petite pompe à air et d'une rampe permettant un micro bullage la rampe est percée par des petits trous d'un diamètre de 0,2 mm permettant la création de petite bulle d'air d'oxygène ou tout autre système de micro bullage.

Un dispositif d'évacuation de l'invention permet notamment de diriger les matières dégradées et diminuer de 80 à 90 % en poids et en volume issue de la dégradation des matières organiques vers un système de décantation ou bassin de repos après un passage dans le bassin d'oxygénation. L'invention transforme les matières dégradées en un liquide facilement évacuable vers l'égout ou réseau public d'assainissement à l'aide d'une pompe permettant d'évacuer un effluent chargé ou épais.

### RECAPITULATION DES INNOVATIONS :

Le dispositif de l'invention permet de transformer ou d'éliminer complètement les matières organiques avec un dispositif disposant de 3 innovations :

Le broyage fin de toutes matières organiques entrantes dans le système et facilitera la digestion biologique. Le broyeur sera équipé d'un injecteur de micro-organismes. L'injection sera séquentiel et interviendra automatiquement en fonction des volumes entrants.

La fermentation de bactéries nidifiées sur un support minéral donnant un accès important à l'échange. La surface d'échange est > 400 m²/cm³ et varie en fonction de la composition des consortiums choisis en fonction du type d'élimination du déchet. La mise au point du système mécanique permet la nidification de bactéries non pathogène de la Groupe 1. Agent biologique susceptible de ne pas provoquer une maladie chez l'homme et caractérisé en ce qu'ils n'appartiennent pas à la liste des micro-organismes pathogène.

Cette invention autorise la cohabitation de plusieurs souches évitant ainsi la prédation et la compétition bactérienne, notamment dans le cadre du traitement des boues organiques en station d'épuration ou toutes matières fermentescibles.

La présente invention permet grâce à la cohabitation des souches de traiter les matière organiques d'origine cartons d'emballage, ainsi diminuer le volume des déchets jusqu'à 100 %.

La présente invention dans son concept mécanique dispose d'un système de bac d'entrée de la matière composté avec oxygénation du bac et une entrée de bactéries spécifique à la finition du travail d'élimination totale.
La présente invention dispose d'un bac de décantation des matières organiques. Ce bac de repos permet l'élimination complète de la matière à 100 %. La présente invention permet une élimination totale du compost organique dans les réseaux d'égout dans les valeurs de rejets admissibles au réseau public d'assainissement par les administrations.

En conclusion on à bien ici démontrer la création d'un appareil capable d'éliminer les déchets alimentaires ou fermentescibles ou autres.
Cette élimination est de 100 %. Les déchets dégradés et transformés en poudre seront retraités dans la présente invention par une dilution à l'eau courante dans un bac oxygéné, puis transférer dans un bac dit de repos ou de décantation.
Ils seront ensuite dirigés selon l'invention vers le réseau public d'assainissement par ce procéder unique.
La présente invention propose une technologie jamais mis en oeuvre avec un tel procédé la présente dégradation organique est réalisé entre > à 6 h et < à 24 heures.

### Etat de la technique

Il existe de nombreux système de transformation des matières organiques en compost.

De nombreux système et procédé de traitement des matières organiques quelconques existent. Par exemple des tubes de compostage dans cet exemple un tel type de compostage est réservé aux très grosse installation du genre centre d'enfouissement technique (CET).
D'autre moyen de compostage de la matière organique existe tel que l'andain. Unité de trie manuelle ou plateforme de compostage des déchets organique ou déchets verts.

II est connu, dans le domaine du traitement des matières organiques issues du ramassage des ordures ménagères, issues de la restauration rapide ou traditionnelle. Ou issue du rejets par les grandes surface, ou issue des cantines scolaires ou plateforme de compostage des déchets verts issues des tontes ou élagage et ou autres groupe producteur de ladite matière organique, polluantes ou non polluantes, de les transférer vers des centres de traitements.

Il est connu que le compostage mature est réalisé sur andain pour une période longue, allant de 18 à 38 semaines. Le problème généralement rencontré par cette technologie sont que les micro-organismes autochtones utilisés par la méthode de l'andain pour le compostage ou l'évacuation en centre d'enfouissement technique (CET) ou de tout autres systèmes, ces micro-organismes ont une durée de vie très courte, parfois la disparition totale des micro-organisme génère d'importantes nuisances olfactives dû à une mauvaise dégradation des matières organiques.

Le compostage des matières organiques par l'intermédiaire des micro-organismes autochtones à une durée moyenne de 18 à 38 semaines selon l'affinage pour obtenir un compost stabilisé.
Le principe d'une mauvaise stabilisation apporte d'importantes nuisances olfactives.

Il est connu différents systèmes de tube de compostage par un triage des ordures ménagères avec une récupération de la matière organique dans la fraction sous trommel.

De nombreux systèmes de compostage des matières organiques avec une base de micro-organismes existent, mais aucun système ne propose une élimination totale avec un cout d'exploitation approprié.

Les publications suivantes illustrent quelques exemples de systèmes connus :

La demande de brevet WO2004/050268 A1 propose un appareil pour le traitement des déchets alimentaires qui traite efficacement les eaux usées et l'odeur produites à partir de déchets alimentaires.

La demande de brevet FR2965737 A1 présente une installation qui comprend un broyeur destiné à être monté en dessous du fond d'un récipient de collecte, comme un évier, et configuré pour écraser les déchets organiques emportés par l'eau de rinçage vers l'extérieur de la cuve de trempage, et qui comprend aussi un composteur relié à l'évacuateur et un réservoir de stockage adapté pour recevoir le mélange de rinçage des particules d'eau et des déchets organiques.

La demande de brevet WO 02/48055 A1 du déposant présente un appareil pour le traitement d'effluents qui comprend un système de distribution de micro-organismes et un système d'oxygénation, associés à une cuve de fermentation. L'appareil est muni d'un système de chauffage, d'une pompe pour effluents alimentant la cuve de fermentation et d'une pompe de vidange de la cuve de fermentation.

### Problèmes rencontrés dans l'état de la technique

Il n'existe pas de système permettant l'évacuation des rejets organiques dans sa totalité : soit de 100 %.

Mon invention est différente de toutes autres techniques en ce quelle est innovante du fait de dégrader et d'éliminer à 100% les rejets organiques issues de la filière restauration ou encore de la filière des grandes surface ou encore des cantines scolaire, ou encore des cantines d'entreprises, ou fabricants de plats cuisinés.

Mon invention est différente de toutes autres techniques en ce quelle est innovante pour la dégradation des boues organiques de station d'épuration et du réensemencement des bassins biologique de façon récurrente et automatique.

Les consortiums mis en oeuvre propose de traiter de nombreux types de matières organiques, issues de la filière restauration ou encore industriels, s'ils sont fortement carencés en nutriments tels que le carbone, l'azote ou le phosphore, qui sont des nutriments indispensables au développement de nombreux micro-organismes utilisés dans le traitement biologique des matières organiques.

Mon invention est différente de toutes autres techniques en ce quelle est innovante par l'élimination totale des déchets organiques via un bac biologique oxygéné et via un bac de décantation via une élimination totale vers le réseau d'égout ou un bac a graisses.

### Buts et objets de l'invention.

L'objectif de la présente invention est de répondre aux différentes modifications de la loi sur le traitement in situ des matières fermentescible.
La présente invention permet l'élimination totale sans déplacement ou transport de matières organiques.

L'objectif de la présente invention est d'apporter des innovations majeures dans le traitement et l'élimination totale de la partie fermentescibles des rejets organiques, tant chez le particulier, que ou en restauration rapide, ou en restauration traditionnel, ou en grande surface, ou cantine industrielle, ou en cantine scolaire ou fabricant de plats cuisinés, ou toutes matières organique comme par exemple les boues issue d'une station d'épuration urbaine.

La présente invention donne la possibilité d'éliminé in situ les résidus organiques afin d'éviter leur transport ou déplacement et leur long traitement en centre spécialisé.
La présente invention par son système mécanique spécifique, permet la préparation in situ et l'augmentation du titrage u.f.c/grammes des micro-organismes sélectionnés. La présente invention apporte une dégradation complète entre > 6 heures à < à 24 heures de toutes les matières organique changeant ainsi toutes les donnés actuelles sur la décomposition de la matière organique.

Selon la présente invention un tel appareil est principalement reconnaissable en ce qu'il comprend :
Une cuve d'entrée de la matière cette cuve permet de quantifier l'organique fermentescible entrant dans la présente invention ne fonctionnant que la porte fermée.
La présente cuve donnant accès directement à un broyeur équipé tout spécifiquement d'un injecteur de micro-organismes préalablement, oxygéné et chauffé dans une cuve spécifiquement acclimaté pour l'augmentation des micro-organismes, comme indiqué dans le paragraphe 15 de la valeur ufc/g des micro-organismes dont l'action est orienté en fonction des besoins.

Une cuve équipée d'un axe métallique rotor en inox en son centre permettant, équipé de pales spécifiquement adapté au malaxage des matières organiques et organisé en temps de marche par un système électronique réglé en fonction des besoins des matières entrantes.
La dite cuve est équipés d'un système de chauffage intégré permettant une température pouvant atteindre 60 ° centigrade.

La dite cuve est équipée d'un système de ventilation intérieur par une petite turbine et d'un système d'extraction des gaz produits par la dégradation des matières organiques et la production d'air humide produite par la multiplication de la valeur u.f.c/grammes des micro-organismes.
Un système de filtration par l'intermédiaire de bac successif rempli par des matériaux filtrant de type pouzzolane, ou zéolithe ou tous autre matériels de filtrations notamment importantes pour les problèmes d'odeurs.

Un système de vis sans fin pour l'évacuation du compost mature vers la cuve de traitement et d'oxygénation.

Une cuve de traitement et d'oxygénation équipé d'un système d'alimentation en eau courante et d'une pompe permettant d'oxygéner l'effluent. Ladite cuve d'oxygénation est équipé d'une rampe munie de petit trou 0,2 mm permettant de fine bulle d'air. Ladite cuve est équipé d'un système de transfert gravitaire vers la cuve de décantation ou dite de repos.

Une cuve de décantation ou dite de repos de l'effluent permettant aux matières non dégradées, matières lourdes de descendre vers le bas de la cuve assurant une continuité dans la dégradation biologique et aux matières légères de rester en surface.

La cuve est équipée d'une pompe d'évacuation régulée par un système électronique situé dans la carte mère cette pompe évacue l'effluent vers le système de traitement de type bac à graisse obligatoire dans les réseaux d'égout dans les valeurs de rejets admissibles au réseau public d'assainissement par les administrations.

Les cuves et bénéficie d'un programme de nettoyage total par cycle maximum de 36 heures le système de nettoyage des cuves et sont gérer électroniquement par la carte mère. L'ensemble de l'invention est placé à l'intérieur d'un châssis en inox équipé d'une grille d'apport en air

### Exemple de réalisation du dispositif.

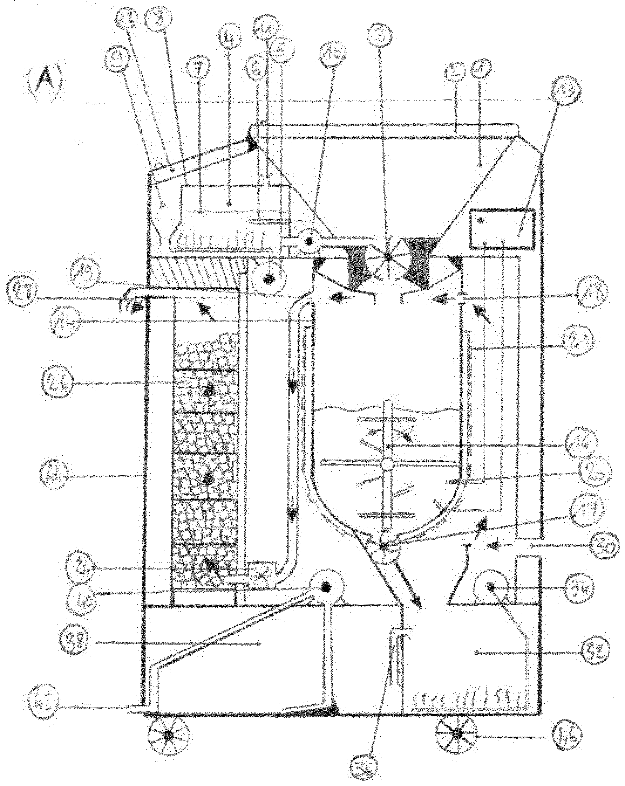

Sur la figure unique (A), on peut voir un exemple de réalisation du dispositif (1) d'entrée de déchets type organique et la fermeture (2)

Un broyeur (3) un système de préparation et d'injection de micro-organismes (4) une rampe d'oxygénation (5) et d'une résistance de chauffage d'un effluent (6) dans une cuve spécifique en inox adapté pour la préparation de micro-organismes servant au traitement (7) le châssis de l'injecteur en inox (8) le magasin de produit biologique pour l'injection (9) une pompe d'injection (10) une alimentation en eau de ville (11) une fermeture du système de préparation et d'injection des micro-organismes (12) gestion électrique et électronique par la carte mère (13)

Une cuve de réception en inox des déchets (14) équipé d'un axe en inox (15) équipé de palles (16) une vis sans fin orientable pour dégagement du compost (17) une grille entrée d'air (18) une grille de sortie d'air par aspiration (19) diverses sondes de contrôle (20) des résistance chauffantes (21)

Une carte mère pour la gestion généralisée de l'ensemble du dispositif (13)

une pompe aspiration d'air (24) 6 caissons de produit de filtrations d'air (26) une sortie d'air filtrée (28) une grille d'entrée d'air (30)

Une cuve inox pour la réception du compost (32) une rampe d'oxygénation du compost dans la cuve (34) équipé d'une conduite de transfert des fluides vers la cuve de décantation (36)

Une cuve de décantation des fluides en inox (38) permettant aux matières lourdes de décanter vers le bas et aux matières légères de flotter en surface est équipé d'une pompe d'évacuation (40) vers le réseau (42)
L'ensemble de l'invention est installé dans un châssis (44) et roues pour le déplacement du dispositif (46)

Procédé de décomposition et de réduction par des micro-organismes non pathogène, spécifiquement conçu pour ce type de décomposition rapide des matières organiques in situ, issues des rejets alimentaires, caractérisé en ce qu'il comporte un concept mécanique et un concept biologique permettant les étapes suivantes:
J'ai appelé ma composition consortium en ce que l'invention et la mise au point de ce consortium comporte un assemblage > à 4 souches fixés sur un support naturel. Les bactéries non pathogènes du Groupe 1. Agent biologique ne pas susceptible de provoquer une maladie chez l'homme et caractérisé en ce qu'ils n'appartiennent pas à la liste des micro-organismes pathogène.
l'invention et la mise au point de ce consortium permet la cohabitation des bactéries sans compétition bactérienne notoire. La caractéristique de ce support minéral non polluant est sa surface d'échange permettant la fixation > à 400 m² par cm³. Ce support minéral apporte l'échange nécessaire à l'augmentation simultané dans la cuve de triturâge chauffé jusqu'à 60 degré centigrade. Les présents consortiums dans la cuve de chauffe peuvent atteindre 10⁷ ufc/gramme. Les consortiums sont dotés en permanence de structurants, afin d'équilibrer l'hydrométrie dans la cuve. Les consortiums sont dotés de nutriments.

La mise au point d'un broyeur (3) spécifique permettant le broyage, le malaxage et l'ensemencement par injection (10) des consortiums de bactéries spécifiques à une dégradation extrêmement rapide (< 24 heures).

Les matières sélectionnées passent par ce broyeur spécifique en ce qu'il comporte un système d'alimentation automatique des consortiums idoine à la dégradation des matières introduites dans le broyeur. L'injection (3) d'une solution de micro-organismes spécifiquement adapté à ce type de compostage issue d'un assemblage de micro-organismes thermophile travaillant principalement dans une zone allant de 45 à 60 ° permettant une décomposition des matières organiques allant de 6 heures à 24 heures (7).

Les matières broyées et ensemencées par des bactéries spécifiques selon la revendication (10) sont introduites dans une cuve de traitement ou la carte mère (13) de commandes électroniques, déclenchera un triturâge par séquence de 15 minutes d'arrêt et 5 minutes de fonctionnement pendant 24 heures.

L'évacuation de la réduction organique en une poudre fine sera après 24 heures maximum évacué par l'intermédiaire d'un système de vis sans fin, conique et conçu avec un angle variable en fonction du besoin d'évacuer. L'angle spécifique sera de 3,5 degrés à 5 degrés. (17)

Les matières organiques ventilées et dégradées dans ladite cuve, après 24 heures de malaxage seront introduites automatiquement dans une cuve d'oxygénation par l'intermédiaire d'un système innovant de vis sans fin revendication (30) pour une continuité dans l'élimination vers le réseau d'assainissement.

La cuve d'oxygénation (32) permet la liquéfaction par l'injection d'eau courante (11) la cuve d'oxygénation (32) apporte un traitement biologique supplémentaire en vue de son transfert vers une cuve de repos ou de décantation (38).

La cuve de repos ou de décantation des matières organiques dégradées permet une continuité dans le traitement des effluents (38) La cuve de repos propose l'évacuation vers le réseau d'assainissement ou vers un bac à graisses.
Les matières dégradées seront en fin de cycle évacuées mécaniquement par une pompe vers le réseau d'égout (40)

## Revendications

1. Appareil pour le traitement mécanique et biologique de matières d'origine organique **caractérisé en ce qu'**il est composé d'un broyeur (3), permettant le broyage fin des matières organiques entrantes (1) d'un dispositif d'injection de micro-organismes (4, 10) dans ledit broyeur, d'une cuve de réception (14) des matières broyées avec un dispositif de mélange, à pales (16), d'une sonde de contrôle (20), d'une grille d'entrée d'air (18) et d'une pompe d'aspiration (19) de l'air, ladite cuve étant également gérée à l'aide d'une carte-mère de gestion électronique et électrique (13), d'une vis sans fin (17) dans le fond de la cuve, qui amène dans une cuve (32) pour la réception du compost, ayant une rampe d'oxygénation du compost dans la cuve (34), ainsi qu'une conduite de transfert (36) des fluides vers la cuve de décantation (38), reliée à une pompe d'évacuation (40) vers le réseau (42) ; l'air de la cuve (14) est aspiré vers une sortie d'air filtré (19) à l'aide d'une pompe (24), traverse 6 caissons de filtres d'air (44) et est évacué par une conduite de sortie d'air (28).

2. Appareil pour le traitement mécanique et biologique de matières d'origine organique selon la revendication 1 **caractérisé en ce que** les cuves sont en Inox.

3. Appareil pour le traitement mécanique et biologique de matières d'origine organique selon la revendication 1 ou 2 **caractérisé en ce que** les micro-organismes sont, préalablement à leur injection dans le broyeur, dilués à l'eau (11), chauffés, grâce à une résistance (6) et oxygénés (5).

4. Appareil pour le traitement mécanique et biologique de matières d'origine organique selon l'une quelconque des revendications précédentes **caractérisé en ce que** le système de filtration d'air comporte des bacs remplis de Matériaux filtrants (du type pouzzolane ou zéolithe).

5. Appareil pour le traitement mécanique et biologique de matières d'origine organique selon l'une quelconque des revendications précédentes **caractérisé en ce que** le système de filtration d'air comporte des bacs remplis de matériaux filtrants (du type pouzzolane ou zéolithe).

6. Appareil pour le traitement mécanique et biologique de matières d'origine organique selon l'une quelconque des revendications précédentes **caractérisé en ce que** la vis sans fin (17) ait un angle de 3.5 à 5°.

7. Appareil pour le traitement mécanique et biologique de matières d'origine organique selon l'une quelconque des revendications précédentes **caractérisé en ce que** le système de filtration d'air comporte des bacs remplis de matériaux filtrants (du type pouzzolane ou zéolithe).

8. Appareil pour le traitement mécanique et biologique de matières d'origine organique selon l'une quelconque des revendications précédentes **caractérisé en ce que** la rampe d'oxygénation (34) soit munie de petits trous (0,2 mm) pour obtenir de fines bulles d'air.

9. Procédé de dégradation ou de transformation en poudre fine de la matière organique solide ou liquide **caractérisé en ce qu'**on utilise un appareil selon l'une quelconque des revendications n°1 à 8.

10. Procédé de dégradation ou de transformation en poudre fine de la matière Organique solide ou liquide selon la revendication n°9 **caractérisé en ce que** la durée du procédé est comprise entre 6 et 24 heures.

## Patentansprüche

1. Biologische Behandlung(Verarbeitung) von Abwässern Vorgegangen, darin charakterisiert, was er die folgenden Etappen umfasst: - Man analysiert die Abwässer, um eine Zusammenstellung und eine Konzentration in ausmachenden Substanzen der Abwässer und ihren körperlichen Besonderheiten zu bestimmen, und um die in diesen Abwässern enthaltenen(unterdrückten) Mikroorganismen zu bestimmen, - Man wählt Mikroorganismen aus, die fähig sind, ausmachende Substanzen der Abwässer herabzuwürdigen, - Man bereitet ein Muster vor, in einem Tank ( 4 ) von Vorbereitung von Mustern von Wasser, einer Dosis der Abwässer und der Nährstoffe vermischend, - Man führt einen Inhalt des Tanks ein sowie die in einer Fähre(Abi) ( 2 ) von Gärung ausgewählten Mikroorganismen, - Man wird warm und man bleicht die Fähre(Abi), - Man fügt einen Inhalt der Fähre(Abis) in die zu behandelnden(sich zu befassenden) Abwässer ein

2. nach der Anforderung 1 Vorgegangen, darin charakterisiert, was er die folgenden zusätzlichen Etappen versteht: - Man wählt Nährstoffe, die für die Entwicklung der Mikroorganismen notwendig sind, obenerwähnter in den ungenügenden Mengen in den Abwässern seiender zu behandelnder(sich zu befassender) Nährstoffe, - Man dosiert eine Menge obenerwähnte Nährstoffe mindestens, die ausreichend ist, um, für die ausgewählten Mikroorganismen, einen Ernährungsmangel und eine Giftigkeit der Abwässer auszugleichen, - Man fügt diese Nährstoffe in den Vorbereitungstank von Mustern ein.

3. Vorgegangen nach einer, was von Anforderungen 1 bis 2 nebensächlich, darin charakterisiert ist, was die ausgewählten Mikroorganismen in der ausreichenden Menge in der Gärungsfähre(Gärungsfähig) sind, um von Ernährungswettbewerb die in den Abwässern enthaltenen(unterdrückten) Mikroorganismen auszuschalten (zu neutralisieren).

4. Nach einer der Anforderungen 1 bis 3 Vorgegangen, darin charakterisiert, was die Vorbereitungsetappe eines Musters, die Eingangsetappen eines Inhaltes des Tanks und der Mikroorganismen in der Gärungsfähre(Gärungsfähig) sowie der Einverleibungsetappe des Inhaltes der Fähre(Abis) in den Abwässern durch periodische Weise erneuert sind.

5. Nach einer der Anforderungen 1 bis 4 Vorgegangen, darin charakterisiert, was er die folgende zusätzliche Etappe versteht: - Man nistet die Mikroorganismen auf einer Unterstützung(Träger) von Nestbau vorher sie, in die Fähre(Abi) eingeführt.

6. Vorgegangen nach einer, was von Anforderungen 1 bis 5 nebensächlich, darin charakterisiert ist, was er zusätzliche Etappen Nächste umfasst: - Man homogenisiert während Zeit(Wetters) bestimmt das im Vorbereitungstank von Muster enthaltene(unterdrückte) Muster.

7. Anlage (1) von Vorbereitung von den zur biologischen Behandlung(Verarbeitung) einschließender Abwässer
dienenden Mikroorganismen:
- Eine Fähre(Abi) (2) von Gärung,
- Oxygenisationsmittel (5) der Gärungsfähre(Gärungsabis),
- Heizungsmittel (6) der Gärungsfähre(Gärungsabis),
- Mindestens ein Lebensmittelmittel (7) von der Gärungsfähre(Gärungsfähig) in den Mikroorganismen geprüft,
- Mindestens ein Mittel (12) von Entleerung, von der Gärungsfähre(Gärungsfähig) geprüft, die darin charakterisiert ist, was er ebenfalls versteht
- Ein Tank (4) von Vorbereitung von Mustern, un échantillon Flüssigkeit enthalten(unterdrücken) könnend,
- Mindestens ein Lebensmittelmittel (7) von der Gärungsfähre(Gärungsfähig) geprüft, in den Mustern des Tanks.

8. Anlage nach der Anforderung 7, die darin charakterisiert ist, was der Vorbereitungstank von Mustern versteht(einschließt):
- Mindestens ein Lebensmittelmittel (7) in Wasser geprüft, - Mindestens ein Lebensmittelmittel (7) in Nährstoffen geprüft - Mindestens ein Lebensmittelmittel ( 7 ) in den Dosen Abwässer geprüft.
- Elektronische Dosierungsmittel von Wasser, Nährstoffen und von Abwässern

9. Anlage nach einer der Anforderungen 7 bis 8, darin charakterisiert, was die Mittel geprüfter Ernährung mit elektronischen Mitteln, um eine Menge der Produkte, eine Frequenz und eine Vertriebsperiodizität dieser Produkte versehen sind im Tank zu prüfen und der Gärungsfähre(Gärungsfähig).

10. Anlage nach einer, was Anforderung 7 bis 9 nebensächlich ist, darin charakterisiert, was er Mittel (11) homogeneisation der im Vorbereitungstank von Mustern enthaltenen(unterdrückten) Flüssigkeit umfasst.

## Claims

1. Biological treatment process of an effluent, **characterized in** the fact that he(it) contains the following stages:
- We analyze the effluent to determine a composition and a concentration in constituent substances of the effluent and their physical characteristics, and to determine micro-organisms contained in this effluent,
- We select microorganisms capable of degrading constituent substances of the effluent,
- We prepare a sample by mixing in a tank (4) of preparation of samples of the water, a dose of the effluent, and the nutriments, - We introduce a contents of the tank as well as microorganisms selected in a tub(ferry, high school diploma) (2) of fermentation, - We warm and we oxygenate the tub(ferry, high school diploma), - We incorporate a contents of the tub(ferry, high school diploma) into the effluent to be handled(treated).

2. Proceeded according to the claiming(demand) 1, **characterized in** the fact that he(it) understands(includes) the following additional stages :
- We choose nutriments necessary for a development of microorganisms, aforementioned nutriments being in insufficient quantities in the effluent to be handled(treated), - We measure a quantity the aforementioned nutriments at least sufficient(self-important) to compensate, for the selected microorganisms, for a nutritional deficiency and for a toxicity of the effluent,
- We incorporate these nutriments into the tank of preparation of samples.

3. Proceeded according to any of the claiming 1-2, **characterized in** what the selected microorganisms are in sufficient amount in the tub of fermentation to neutralize by nutritional competition microorganisms contained in the effluent.

4. Proceeded according to one of the claiming(demands) 1 - 3, **characterized in** the fact that the stage of preparation of a sample, the stages of introduction of a contents of the tank and the microorganisms in the tub (ferry, high school diploma) of fermentation as well as the stage of incorporation of the contents of the tub (ferry, high school diploma) in the effluent are renewed by periodic way.

5. Proceeded according to one of the claiming 1-4, **characterized in** what he understands the following additional stage: - one nerdified micro-organisms on a support of nesting before of them introduced into the tub.

6. Proceeded according to any of the claiming(demands) 1 - 5, **characterized in** the fact that he(it) contains additional stages following one: - We homogenize during a time(weather) determined the sample contained in the tank of preparation of sample.

7. Device (1) of preparation of microorganisms being of use to the biological treatment of an including effluent: - a tub (2) of fermentation, - ways of oxygenation (5) of the tub of fermentation, - ways of heating (6) of the tub of fermentation, - at least a way of food (7) checked of the tub of fermentation in microorganisms, - At least a way (12) of draining checked of the tub of fermentation, **characterized in** what he also understands - a tank (4) of preparation of samples, being able to contain un sample fluid, - at least a way of food (7) checked of the tub of fermentation, in samples of the tank.

8. Device according to the claiming 7, **characterized in** what the tank of preparation of samples includes:
- at least a way of food (7) checked in water, - At least a way of food (7) checked in nutriments - At least a way of food (7) checked in doses of effluents. - Electronic ways of dosage of the water, the nutriments and the effluent

9. Device(Plan) according to one of the claiming(demands) 7 - 8, **characterized in** the fact that the ways(means) of checked(controlled) food(supply) are provided with electronic ways(means) to check(control) a quantity of products, a frequency and a periodicity of distribution(casting) of these products in the tank and the tub (ferry,high school diploma) of fermentation.

10. Device(Plan) according to any claiming(demand) 7 - 9, **characterized in** what he(it) contains ways(means) (11) of homogenization of the fluid contained in the tank of preparation of samples.
